# EUROPEAN PATENT SPECIFICATION

(11) **EP 4 166 040 B1**
(45) Date of publication and mention of the grant of the patent: **16.07.2025**
(21) Application number: 22200512.6
(22) Date of filing: 10.10.2022
(51) Int. Cl.: A47B 96/06, A47B 57/44, F16B 12/14, F16B 12/20

(54) **JOINT FOR JOINING TOGETHER TWO PANELS OF A FURNITURE UNIT**
VERBINDUNG FÜR ZWEI MÖBELPLATTEN
JOINT POUR ASSEMBLER DEUX PANNEAUX D'UN MEUBLE

(30) Priority: 12.10.2021 IT 202100026132
(43) Date of publication of application: 19.04.2023
(73) Proprietor: O.M.M. S.r.l. dell'Ing. Roberto Natale Mariani, 20832 Desio (MB) (IT)
(72) Inventor: MARIANI, Roberto Natale, 20832 DESIO (MB) (IT); MARCHITTI, William Marco, 20832 DESIO (MB) (IT)
(74) Representative: Colombo, Stefano Paolo

(56) References cited:
- EP-A1- 0 027 267
- EP-A1- 1 538 347
- EP-A1- 3 111 804
- WO-A1-2020/079578
- GB-A- 2 047 370
- US-A- 3 941 028

## Description

### BACKGROUND

The present invention relates in general to joining systems for joining together two panels of a furniture unit or the like. More particularly, it relates to an improved joint for joining together two panels, including panels with a non-uniform consistency, such as chipboard panels or the like.

### PRIOR ART

As is known, a furniture unit typically comprises two vertical panels (commonly called "flanks" or "shoulders"), a horizontal bottom panel (commonly called "base") and a top panel which is also horizontal (commonly called "lid"). Furthermore, the furniture unit may comprise a number of horizontal intermediate panels, otherwise known as "shelves".

During assembly of the furniture unit, the shoulders are typically joined together with the bottom panel of the furniture unit and with the top panel. Furthermore, the intermediate panels are usually joined to the shoulders of the furniture unit so as to form shelves and/or to reinforce the furniture unit.

In particular, a shelf of a furniture unit may be a shelf with a single visible edge (also called "single-face" or "blind" shelf) or a shelf with double visible edge (also called "double-face" shelf). In the first case it consists of a shelf where, when the furniture unit is assembled, only the front edge is visible and the rear edge normally rests against a panel or a wall behind the furniture unit. In the second case instead it consists of a shelf which, when the furniture unit is assembled, may have visible both the front edge and the rear edge.

EP3524831, in the name of the same present Applicant, discloses an expansion joint for joining together two panels.

EP 3 111 804 A1 discloses another joint known in the state of the art.

### SUMMARY OF THE INVENTION

The joint disclosed in EP3524831 is very efficient and provides an efficient system for joining together two panels, typically in order to assemble a furniture unit.

The Applicant has defined the general object of providing an expansion joint for joining together two panels, in particular for panels made of wood or chipboard or a non-homogeneous material, which is even better than the known joint described in EP35248731 or EP 3 111 804 A1.

In particular, the Applicant has defined the object of providing a joint, which has similar performance features, while obtaining a reduction in the production and assembly cost.

The Applicant has defined the object of finding an alternative to the solution formed by the fixing pin which is configured to engage stably with the fixing member.

According to the Applicant, in order to provide stable engagement between the joint and panel, the body of the joint must be knurled.

According to a first aspect of the invention, a joint for joining a first panel together with a second panel is provided, the joint comprising:
a substantially hollow body having a substantially cylindrical shape with an outer end and an inner end, and
gearing for rotatably displacing a threaded pin from a position retracted inside the body into a position at least partially extracted from the body
wherein said gearing comprises a transverse shaft with a first bevel gear wheel and a longitudinal shaft with a second bevel gear wheel in engagement with said first bevel gear wheel, wherein the rotation of the transverse shaft causes the rotation of the longitudinal shaft and the rotation of the threaded pin, wherein the body comprises an outer surface and wherein said outer surface comprises raised ridges forming a knurling, wherein the knurling has a substantially helical progression.

According to the invention, the joint also comprises an expansion plug which is configured to engage with the outer surface of the body when the joint is completely inserted inside a recess in the thickness of a panel, for example a shelf, of a furniture unit.

According to embodiments, the joint further comprises a hexagonal element for rotating the body.

According to embodiments, the joint comprises a slot for a screwdriver at the outer end for rotating the body.

According to embodiments, the threaded pin comprises a metric thread or a self-tapping thread.

According to embodiments, the joint further comprises a pin for engaging with the transverse shaft, wherein the pin comprises a hexagonal shank and a head having a circular cross-section with a hexagon socket.

According to another aspect, the present invention provides a method for joining a first panel, for example a shelf of a furniture unit, to a second panel, for example an upright of a furniture unit, wherein said first panel comprises a recess in its thickness and a transverse hole and said second panel comprises a threaded bush, or a hole or a recess, the method comprising:
providing a joint of the aforementioned type, inserting the joint completely inside the recess of the first panel, rotating the transverse shaft so as to cause the rotation of the longitudinal shaft and the rotation of the threaded pin, such that the threaded pin passes from the configuration inside the body to the configuration at least partially outside the body and engages inside a threaded hole in the bush or a hole formed directly in the second panel.

According to embodiments, the method further comprises the step of fully inserting the joint comprises the step of pushing the joint so that the expansion plug expands on the outer surface of the body.

According to embodiments, the method further comprises the step of rotating the joint body with a tool for example a hex wrench or a screwdriver, so as to adjust its position or extract it from the recess.

### BRIEF DESCRIPTION OF THE FIGURES

The present invention will become clearer from the following detailed description, provided by way of a non-limiting example, to be read with reference to the attached drawings in which:
- Fig. 1 shows an axonometric view of an embodiment of a joint with a plug fitted only on the inner end of the joint body, the plug is not expanded;
- Fig. 2 is an axonometric view of an example of a joint not forming part of the invention, without plug;
- Fig. 3 is an exploded view of the joint of Fig. 1;
- Figs. 4.1 - 4.5 are a series of views of the joint of Fig. 1, again in the configuration in which the plug is not expanded;
- Figs. 5.1 - 5.5 are a series of views of the joint of Fig. 1 in the configuration in which the plug is completely expanded;
- Figs. 6.1 - 6.5 are a series of views of the joint of Fig. 2;
- Figs. 7.1 - 7.5 show in schematic form how to insert the joint of Fig. 1 into the thickness of a panel and how to use it to join that panel to another panel;
- Figs. 8.1 - 8.5 show in schematic form how to insert the joint of Fig. 2 into the thickness of a panel and how to use it to join that panel to another panel;
- Fig. 9 shows an accessory which can be used together with the joint of Fig. 1;
- Fig. 10 shows in schematic form where the accessory is inserted;
- Fig. 11 shows an axonometric view of another example not forming part of the present invention;
- Fig. 12 is an exploded view of the joint of Fig. 11;
- Fig. 13 shows an axonometric view of another embodiment of the joint according to the present invention, with the plug fitted to the end, but not expanded;
- Fig. 14 shows an axonometric view of another example of a joint not forming part of the present invention, without plug;
- Fig. 15 is an exploded view of the joint of Fig. 13;
- Figs. 16.1 and 16.2 show in schematic form the mode of use of the joint according to Fig. 13;
- Fig. 17 shows an axonometric view of another example of a join not forming part of the present invention with the plug completely expanded;
- Fig. 18 shows an axonometric view of another embodiment of the joint without expansion plug;
- Fig. 19 is an exploded view of the joint of Fig. 17;
- Fig. 20 shows a possible use of the joint of Fig. 17;
- Figs. 21.1 - 21.5 are various views of two joints not forming part of the invention, hinged together:
- Figs. 22.1 - 22.5 are various views of two other joints not forming part of the invention, hinged together:
- Figs. 23.1 - 23.3 show possible uses of the hinged joints of Figures 21;
- Figs. 24.1 - 24.3 show a pin for facilitating rotation of the transverse shaft; and
- Figs 25.1 - 25.2 show how the pin is inserted in a panel.

### DETAILED DESCRIPTION

The joint according to the present invention is particularly suitable for being inserted in a milled opening formed in a panel of a furniture unit or the like. In particular, it is suitable for being inserted in the side thickness of a shelf of a furniture unit in order to connect said shelf to a side of the said furniture unit. The joint according to the present invention is suitable for use in any material, but is particularly effective when the shelf is made of a non-homogeneous material, such as a chipboard panel or a laminated chipboard panel. These panels are formed by bonding together wood chips.

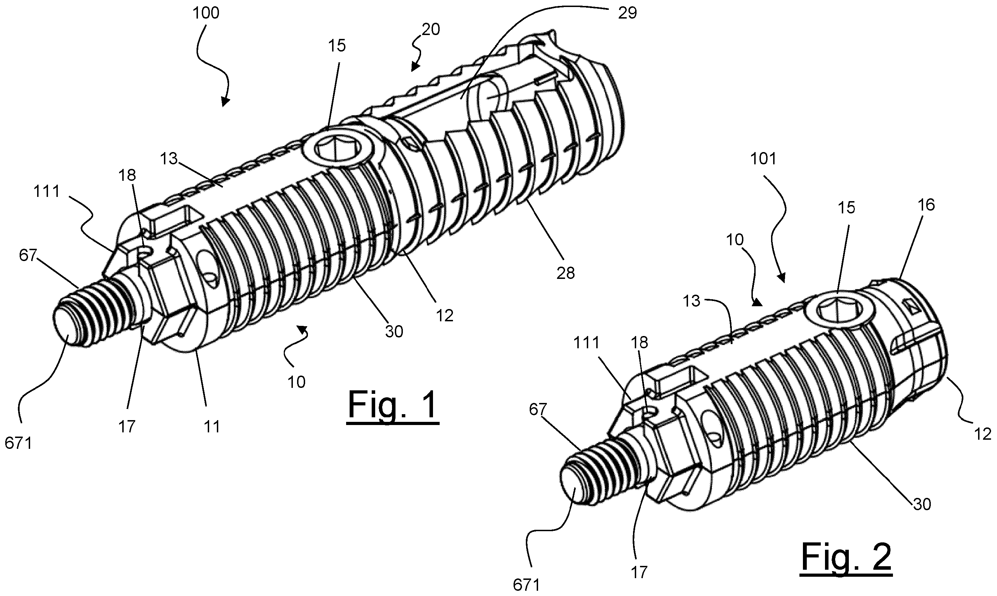

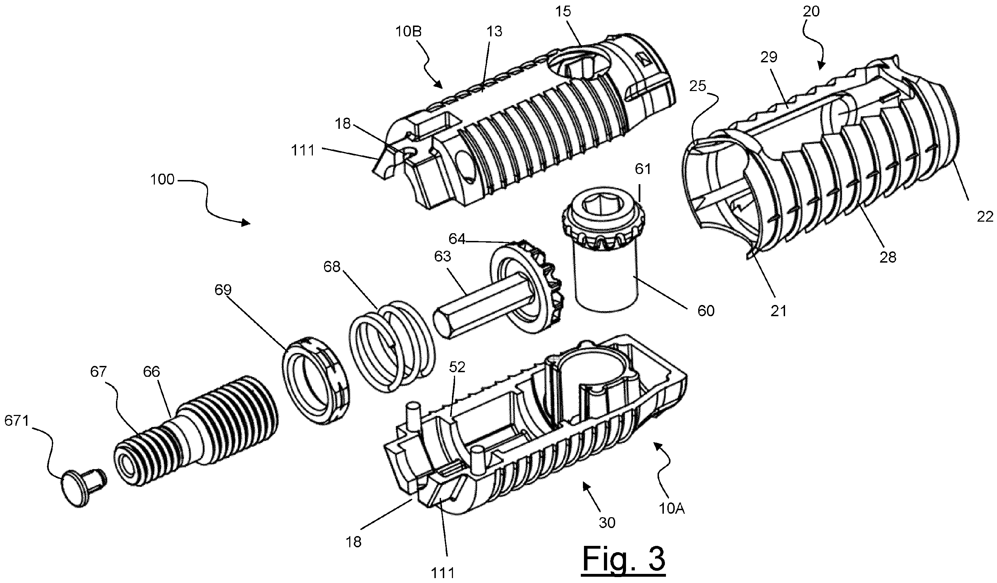

With reference initially to Figures 1 and 3, the main components of a first joint according to the present invention are shown.

A joint 100 according to the present invention typically comprises a body 10 and a plug 20.

The body 10 has a roughly cylindrical shape with a first end (also called outer end) 11 and a second end 12 (also called inner end since, during use, it is located close to the bottom of the hole inside which the joint is inserted). Preferably, the body 10 is formed by two half-shells 10A and 10B which, when they are joined together, form a substantially hollow body. The interior of the body 10 and any gearing inside it will be described further below. The half-shells may be joined together by means of pins and holes. The half-shell 10A is also called male half-shell because it has pins, while the half-shell 10B is also called female half-shell because it has holes for receiving the pins.

The body 10 has a roughly circular cross-section, but preferably comprises two longitudinal strips 13 which are diametrically opposite to each other and form two flat surfaces. The longitudinal strips 13 extend substantially along the whole length of the body 10. The body 10 has a transverse through-hole 15 in the vicinity of the inner end 12 of the body 10.

Preferably, the inner end 12 of the body 10 is tapered and has a pair of diametrically opposite reliefs 16 for retaining the plug 20, as will be clarified below.

The outer end 11 of the body 10 has preferably a longitudinal hole 17. Preferably, it also has a centring slot 18 for the head of a screwdriver or another similar tool.

The outer end 11 of the body 10 also comprises a hexagonal element 111 for rotating the body 19, when necessary. As will be clarified below, it may also be required to rotate the joint in order to insert it into a cavity 201 of the panel, in order to adjust its position or extract it.

The outer surface of the body 10 comprises raised ridges which form a knurling 30. According to the invention, the knurling 30 has a substantially helical progression. Preferably the knurling 30 is interrupted in the region of the longitudinal strips 13.

The body 10 may be made of a metallic material such as steel, aluminium, zamak or alloys thereof. Alternatively, the body 10 may be made of structural plastics such as glass-fibre reinforced nylon.

The plug 20 has preferably a roughly cylindrical shape with a proximal end 21, a distal end 22 and a side surface 23. The terms "distal" and "proximal" relate to the inner end 12 of the body 10.

The proximal end 21 comprises preferably a collar 25 configured to engage with the reliefs 16 of the inner end 12 of the body 10 so that, in a preassembled configuration (Fig. 1), the body 10 and the plug 20 are stably connected. The collar preferably has a pre-weakened point for favouring breakage thereof in a substantially predictable manner.

Preferably, the side surface of the plug 20 comprises a plurality of parallel fins 28. Preferably the side surface 23 of the plug 20 has a pair of longitudinal diametrically opposite openings 29 with a size and shape similar to that of the longitudinal flat surfaces 13 of the body 10.

The plug 20 is preferably made of a thermoplastic material and is preferably obtained by means of moulding. Preferably it has a thickness of the side surface which is small, for example less than 1 mm. Preferably, the thickness at the distal end 22 is greater.

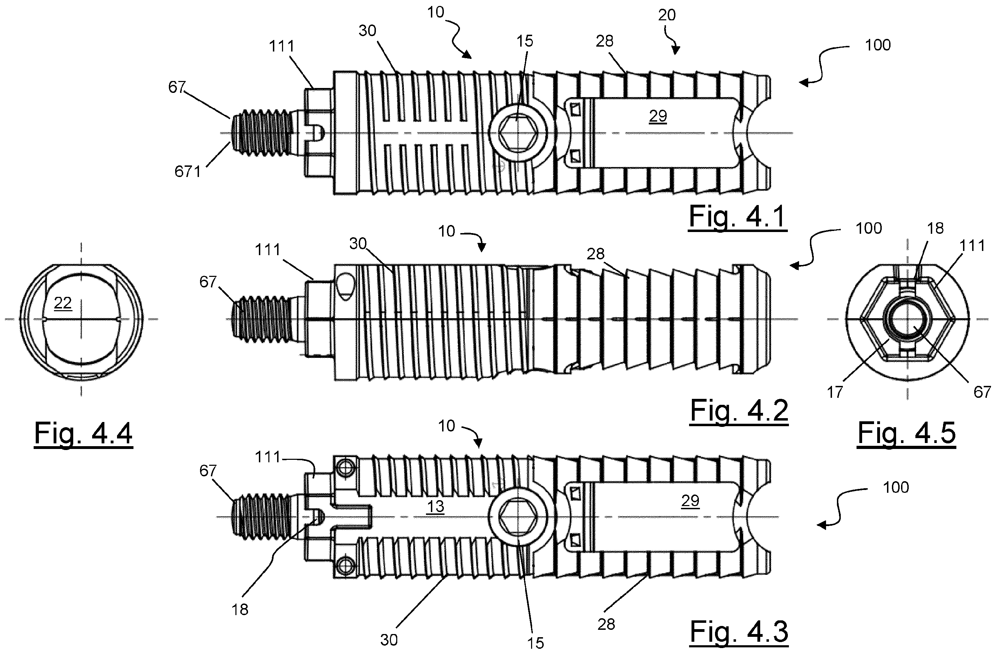

The various views of Figures 4.1 - 4.5 show the joint 100 with the plug 20 in the non-expanded configuration. This is typically the configuration which the joint 100 has before being inserted into a recess 201 in the thickness of a panel (for example a shelf) of a furniture unit.

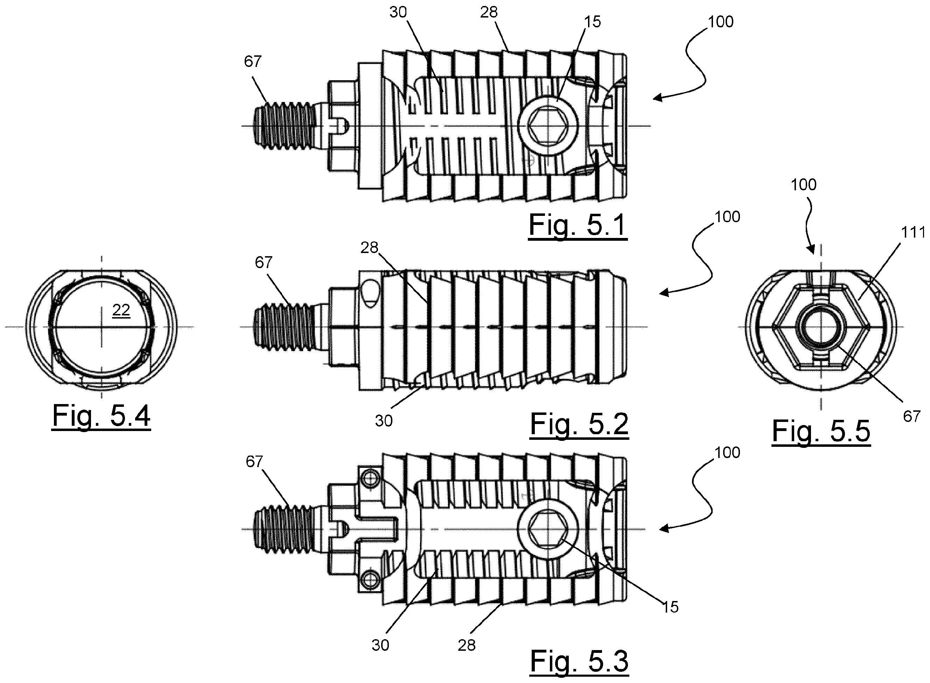

The various Figures 5.1 - 5.5 show instead the joint 100 with the plug 20 in the expanded configuration, completely fitted over the body 10. This is typically the configuration which the joint 100 has after it has been fully inserted inside a recess 202 in the thickness of a panel (for example a shelf) of a furniture unit.

Fig. 3 shows the components inside the body 10. The components comprises a transverse shaft 60 with a first bevel gear wheel 61 and a longitudinal shaft 63 with a second bevel gear wheel 64 in engagement with said first bevel gear wheel 61. The first shaft 60 preferably comprises a cylinder having a through-cavity with a hexagonal cross-section so that it may be rotated by means of a hex wrench of the Allen key type 400. The hexagonal through-cavity is situated opposite the transverse through-hole 15 of the body 10.

The longitudinal shaft 63 preferably comprises an internal shaft with a hexagonal cross-section connected to the second bevel gear wheel 64 and a tie-piece 66 concentric with the internal shaft and in engagement with it so that rotation of the internal shaft 63 causes the rotation of the tie-piece 66. The tie-piece 66 comprises a threading 661 and terminates in an externally threaded section which forms said threaded pin 67. According to one embodiment, the threading of the threaded pin 67 may be an M4 or M6 threading. An end stopper plug 671 may be provided in order to prevent scratching of the panels with which the threaded pin 67 comes into contact.

A nut 69 which acts as a shoulder is preferably provided in an intermediate position along the tie-piece 66. The thread 661 has the function of allowing the tie-piece 66 to be moved backwards and forwards. Preferably, a cylindrical spring 68 is mounted around said tie-piece 66 and is retained between said nut 69 and a rib 52 (see Fig. 3) inside the half-shells 10A and 10B of the body 10. The spring 68 tends to push the nut 69 which in turn pushes the tie-piece 66, causing the threaded pin 67 to move outwards. The nut 69 is preferably screwed onto a threading of the tie-piece 66.

The threaded pin 67 may assume (i) the position where it is fully retracted, i.e. not projecting from the outer end of the body, (ii) the position where it is fully extended, namely fully projecting from the outer end of the body, or (iii) any intermediate position. The displacement of the threaded pin 67 occurs when the transverse shaft 60 (accessible via the transverse hole 15 in the body 10) is rotated. This rotation causes the rotation of the first bevel gear wheel 61, the second bevel gear wheel 64, the internal shaft 63 and the tie-piece 66.

The joint 101 of Figure 2 is entirely similar to the joint 100 of Fig. 1 and a detailed description thereof will not be repeated. The difference consists in the fact that the joint 101 in Fig. 2 does not have an expansion plug and is not forming part of the invention.

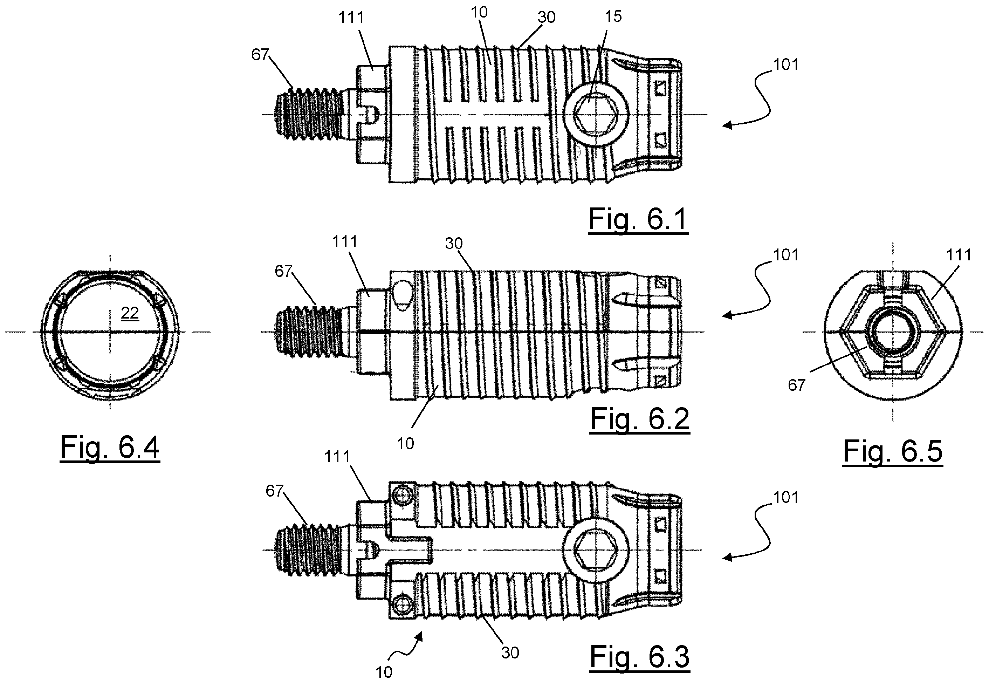

The gripping action is ensured by the knurling 30 on the surface of the body 10. The joint 101 is also shown in the various views of Fig. 6.1 - 6.5.

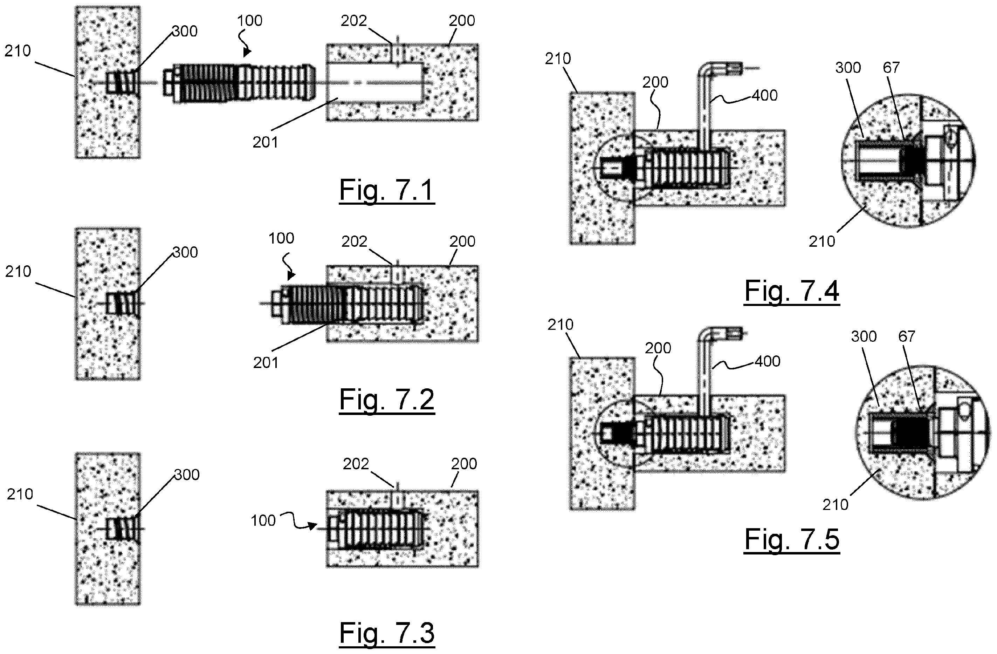

Figure 7 shows in schematic form the main steps for joining a first panel (shelf) 200 to a second panel (upright or shoulder) 210 by means of the joint 100 according to the first embodiment. The shelf 200 is provided with a recess 201 for housing the joint 100 according to the invention and the upright 210 has, inserted inside it, a bush 300 with a threaded hole for receiving the pin 67 of the joint 100 according to the invention. The shelf 200 also has a transverse hole 202 formed therein beforehand in a suitable position. Figure 7.1 shows a portion of the shelf 200, the recess 201, the transverse hole 202 and the joint 100 according to the first embodiment. The joint 100 is preassembled and the threaded pin 67 is substantially in its completely retracted position. The joint 100 is about to be inserted inside the recess 201. Then (Figure 7.2) the preassembled joint 100 is pushed fully inside the recess 201. With a further axial pushing force, the body 10 is pushed inside the plug 20 and this movement causes a substantially uniform radial expansion of the plug 20 inside the recess 201 (Figure 7.3). Advantageously, with this movement, the knurling 30 of the body 10 engages with the inner surface of the plug 20. Owing to this engagement, the extraction force which would be required to extract the body 10 from the recess 201 is greatly increased. This is extremely advantageous in all cases, but in particular when the material is not compact, but is an agglomerated material. Figures 7.4 and 7.5 show the joint completely inserted inside the recess. An enlarged detail is also shown encircled for each figure.

Fig. 7.4 shows the threaded pin 67 partly extracted and therefore partly screwed inside the hole of the bush 300 in the shoulder 210. In Fig, 7.5 the pin is fully extracted. In order to extract the threaded pin 67, the assembler inserts an Allen key 400 inside the transverse hole 202 in the shelf 200 and engages it with the transverse shaft 60 of the joint 100.

As shown in Figures 4, the joint 100 is preassembled so that the two openings in the plug are aligned with the two flat surfaces of the body. The two openings also allow full access to the transverse hole 15 inside the body 10. Obviously it is also necessary for the transverse hole in the body to be aligned with the transverse hole 202 in the shelf 200. If a slight misalignment after assembly is noticed, the assembler could rotate the joint by means of the hexagonal element 111. The assembler could also decide to extract the joint from the recess by rotating it by the amount required.

The joint 100 according to the first embodiment is very advantageous and practical. Firstly it ensures a strong gripping action because it acts over a broad surface area. Another advantage which it has is that it may be inserted at the factory by means of special machinery and need not be assembled on-site. Advantageously, the threaded pin 67 is kept fully retracted. The fact that it does not project facilitates storage and assembly and prevents the risk of the threaded pin 67 scratching or damaging other parts of the furniture unit. It also allows assembly of a furniture unit inside a niche.

Advantageously, the joint may be assembled only by exerting a pressure in the axial (longitudinal) direction of the body. Rotational movements are not necessary.

Another advantage is that the joint is completely reversible and the shelf in which it is mounted may be used as a middle shelf, as a base or as a lid.

Owing to the spring 68, the threaded pin 67 is pushed so as to engage in an efficient manner with the threading of the bush 300 in the shoulder 210.

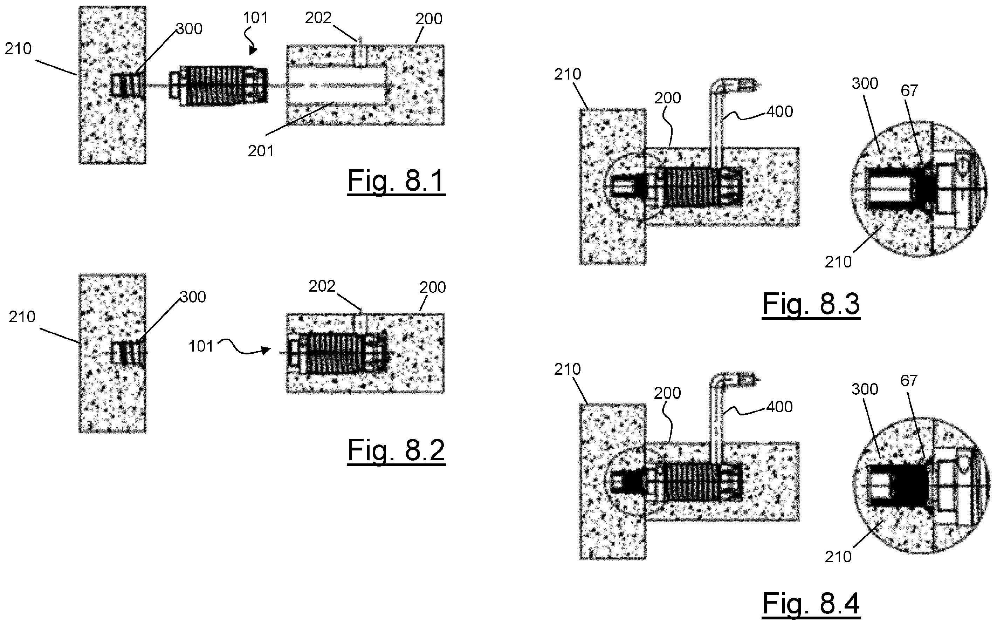

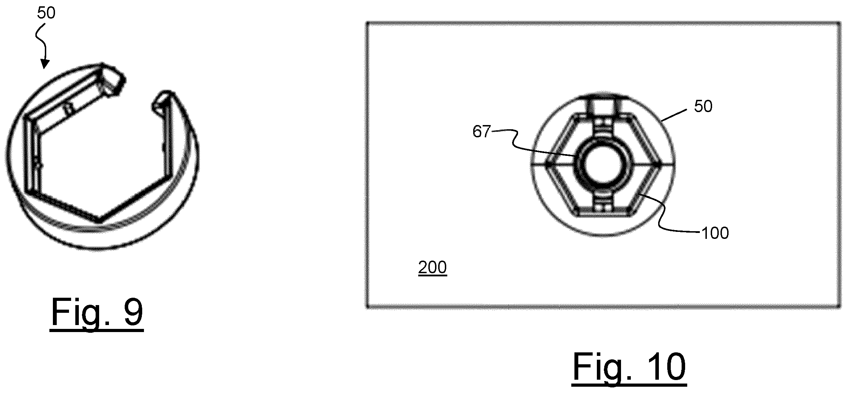

Figure 9 shows in schematic form the main steps for joining a first panel (shelf) 200 to a second panel (upright or shoulder) 210 by means of the joint 101 not forming part of the invention, according to Fig. 2. The shelf 200 is provided with a recess 201 for housing the joint 101 according to the invention and the upright 210 has, inserted inside it, a bush 300 with a threaded hole for receiving the pin 67 of the joint 101. The shelf 200 also has a transverse hole 202 formed therein beforehand in a suitable position. Figure 8.1 shows a portion of the shelf 200, the recess 201, the transverse hole 202 and the joint 100, before it is inserted inside the recess 201. Then (Figure 8.2) the joint 100 is pushed fully inside the recess 201. Advantageously, with this movement, the knurling 30 of the body 10 is made to engage with the inner surface of the recess 201. Owing to this engagement, the extraction force which would be required to extract the body 10 from the recess 201 is greatly increased. Figures 8.3 and 8.4 show the joint 101 fully inserted inside the recess. An enlarged detail is also shown encircled for each figure.

Fig. 8.3 shows the threaded pin 67 partly extracted and therefore partly screwed inside the hole of the bush 300 in the shoulder 210. In Fig. 8.4 the pin 67 is fully extracted. In order to extract the threaded pin 67, the assembler inserts an Allen key 400 inside the transverse hole 202 in the shelf 200 and engages it with the transverse shaft 60 of the joint 100.

Fig. 9 shows an accessory 50 which may be used in association with the joint 100 or the joint 101. The accessory 50 is essentially a circular ring which is split, namely open on one side. Internally it has a substantially hexagonal shape. The size of the hexagon substantially corresponds to the hexagonal element 111. The accessory has the main function of closing off the space between the inner surface of the recess 201 and the hexagonal element 111, as shown in Fig. 10. This, in order to preserve the material around the joint as well as for aesthetic purposes.

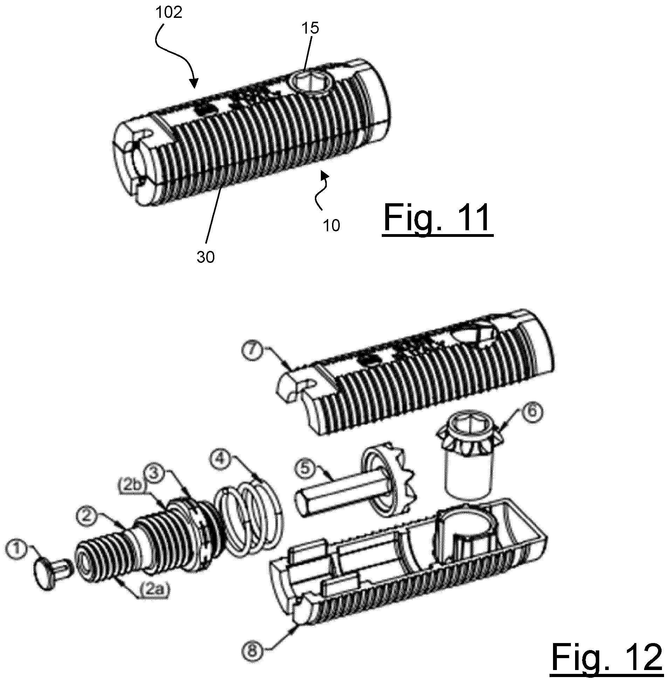

The example 102 not forming part of the invention (Figures 11 and 12) is similar to the preceding example 101. The difference consists in the fact that the hexagonal element 111 is not present, but there is a slot 112 for a screwdriver. As regards the rest, the body 10 (with the knurling 30) is substantially the same. The components inside the joint are also substantially the same.

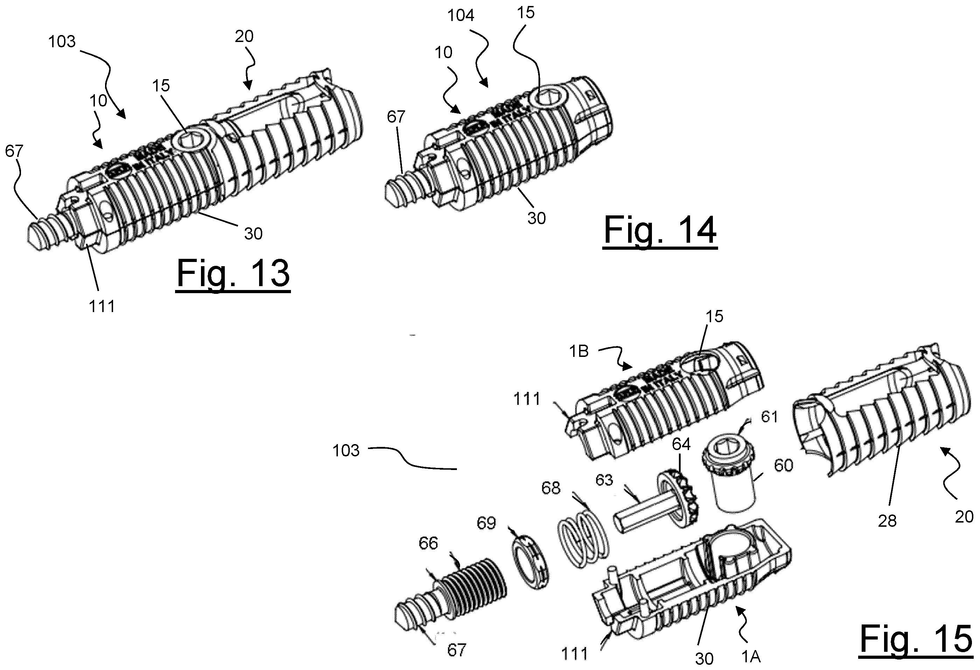

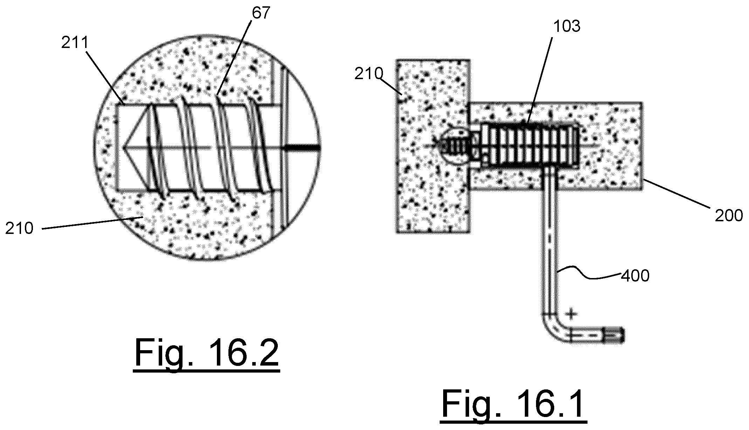

The second embodiment 103 of the joint 103 (Figures 13 and 15) is similar to the first embodiment 103. The difference consists in the fact that the threaded pin 67 has a European thread (i.e. triangular for wood screws) instead of a metric thread. This allows the threaded pin 67 to engage directly inside a hole 211 of the upright 210. A bush inside the upright is not required, as shown in Figures 16.1 and 16.2.

The example 104 of the joint not forming part of the invention is shown in Fig. 14 and is similar to the second embodiment. Unlike the joint 103, the joint 104 does not comprise a plug, but has only the knurling 30 on the surface of the body 10.

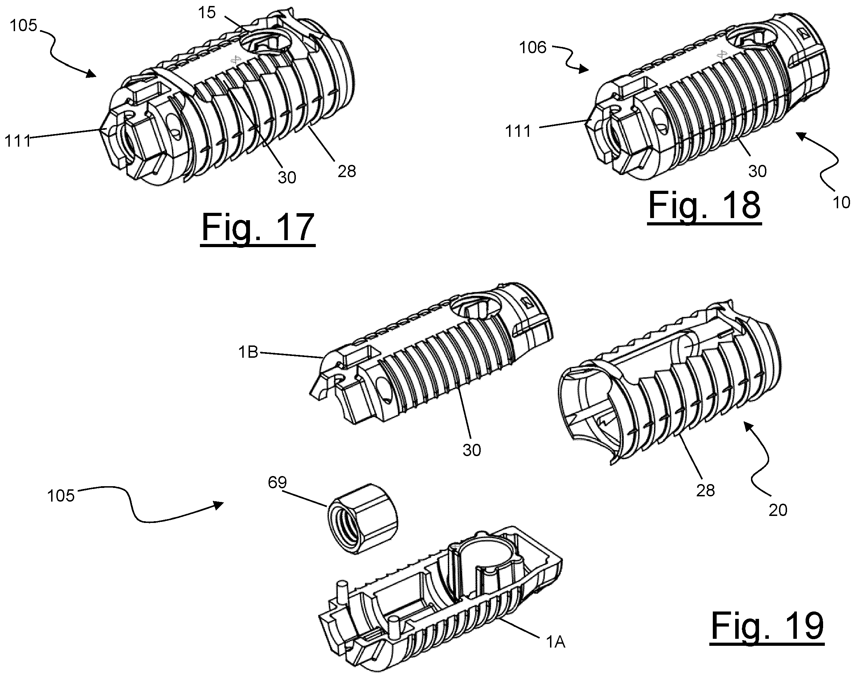

The example 105 (Figures 17 and 19) is not forming part of the invention and is entirely similar to the first embodiment 100, but is of the female type, namely without the threaded pin 67. Whereas the body 10 is entirely similar to the body 10 of the first embodiment, it does not contain gears and parts. It contains only a nut 69. In Fig. 17 the plug is shown fully expanded on the body 10.

The example 106 (Fig. 18) is not forming part of the invention and is entirely similar to the preceding example 105. The difference consists in the fact that the joint 106 does not have an expansion plug.

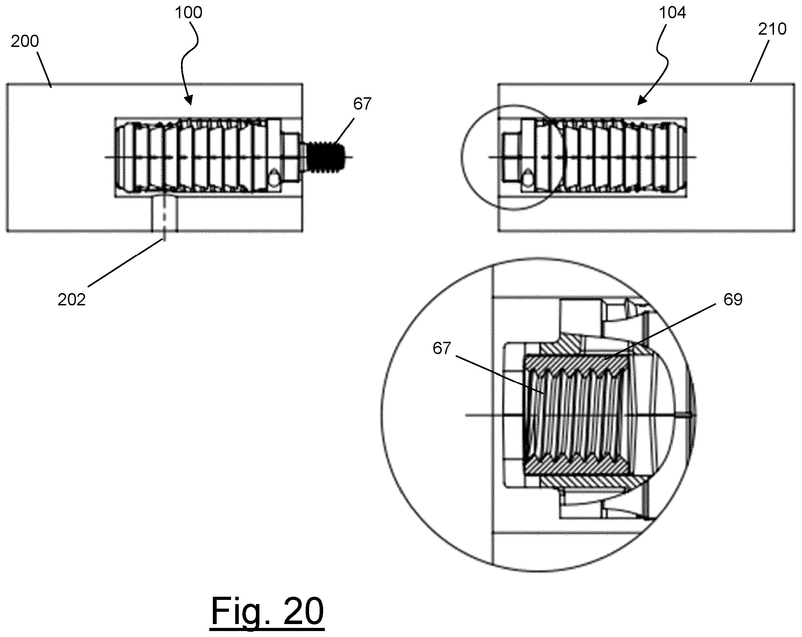

In Fig. 20 a possible use of the female joint 105 according to figures 17 and 19 is schematically shown. The female joint 105 is used to engage with a male joint 100 according to the first embodiment. In this way two panels may be joined together in an end-to-end configuration.

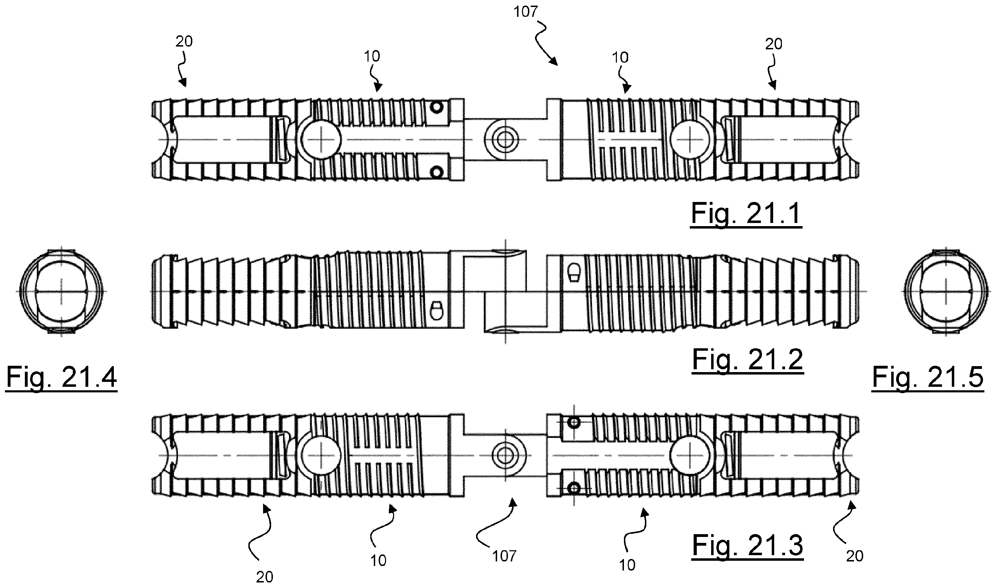

Figures 21 show different views of a pair of joints 107 not forming part of the invention, which are rotatably connected so as to join together two panels in a hinged manner. Each joint 107 comprises a body 10 with knurling 30 and a plug 20.

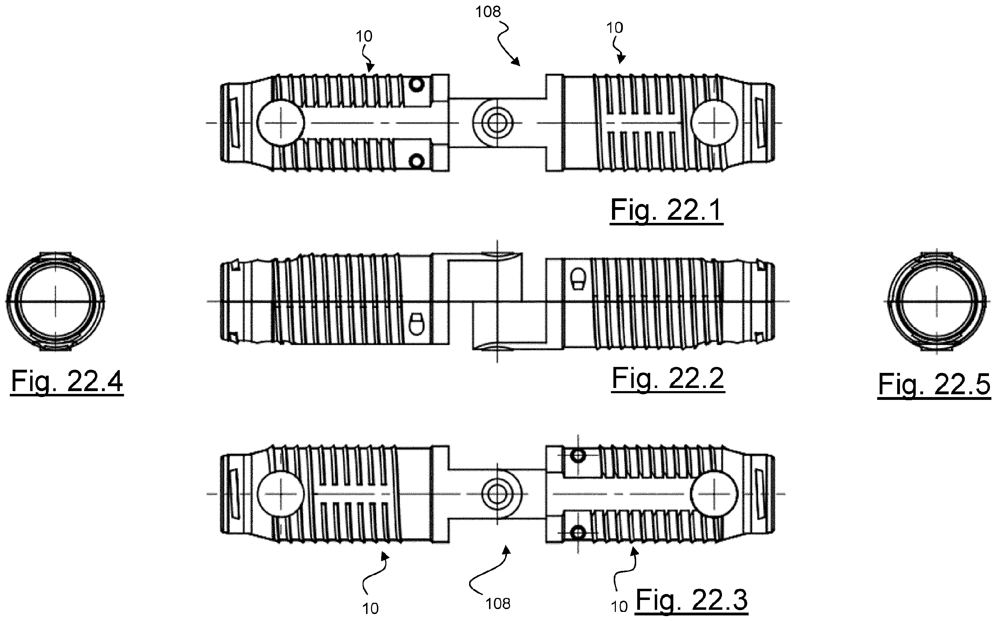

Figures 22 show different views of a pair of joints 108 not forming part of the invention, which are rotatably connected so as to join together two panels in a hinged manner. Each joint 108 comprises a body 10 with knurling 30, but does not comprise a plug 20.

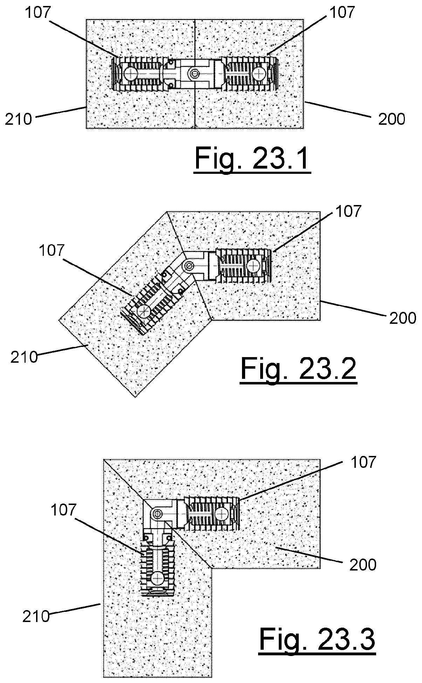

Figures 23 show two panels which are joined together by means of the joints 107. The panels may be joined together end-to-end (Fig. 23.1), at an angle other than 90° (Fig 23.2) or at right angles (Fig. 23.3).

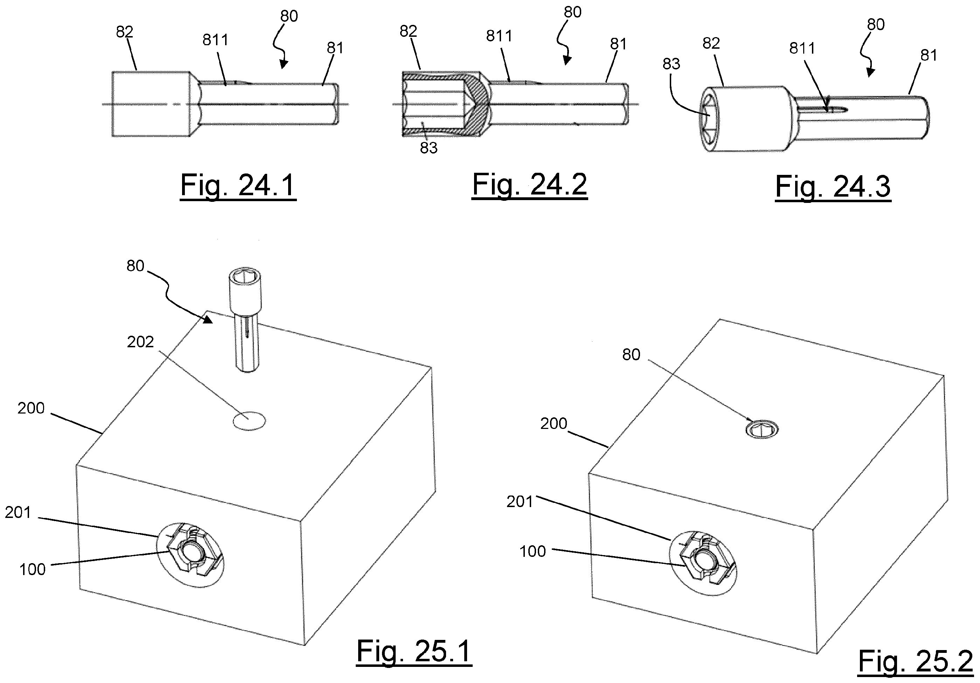

Figures 24.1, 24.2 and 24.3 show a pin 80 designed to be inserted inside the transverse hole 202 of the panel 200. The pin 80 comprises a hexagonal shank 81 and a head 82 with a circular cross-section. The head 82 comprises a hexagon socket 83. The hexagonal shank 81 also comprises a ridge 811 for firmly retaining the hexagonal shank 82 inside the shaft 60, which also has a hexagonal cross-section.

Figure 25.1 shows the pin 80 before it is inserted inside the hole 202. Finally, Figure 25.2 shows the pin 80 after it has been inserted inside the hole 202.

The pin 80 favours the rotation of the transverse shaft 60 and prevents the Allen key 400 from damaging the edge of the hole 202. It may also serve for aesthetic purposes and conceals the surface of the hole 202. This is advantageous in particular when the hole 202 is formed in a panel with a non-uniform consistency, such as a chipboard panel.

## Claims

1. A joint (101, 102, 103, 104) for joining a first panel (200) together with a second panel (210, 200), comprising:
a substantially hollow body (10) having substantially a cylindrical shape with an outer end (11) and an inner end (12), and
gearing for rotatably displacing a threaded pin (67) from a position retracted within the body (10) to a position at least partially extracted from the body (10);
wherein said gearing comprises a transverse shaft (60) with a first bevel gear wheel (61) and a longitudinal shaft (63) with a second bevel gear wheel (64) in engagement with said first bevel gear wheel (61), wherein the rotation of the transverse shaft (60) causes the rotation of the longitudinal shaft and the rotation of the threaded pin (67),
wherein said body (10) comprises an outer surface and wherein said outer surface comprises raised ridges forming a knurling (30),
**characterised in that**
the knurling (30) has a substantially helical progression,
and **in that** the joint further comprises an expansion plug (20) which is configured to engage with the outer surface of the body (10) when the joint is fully inserted inside a recess (201) in the thickness of a panel (200), for example of a shelf, of a furniture unit.

2. The joint according to claim 1, further comprising a hexagonal element (111) for rotating the body (10).

3. The joint according to any of claims 1-2, comprising a slot for a screwdriver at the outer end (11) for rotating the body (10).

4. A joint according to any one of the preceding claims, wherein the threaded pin (67) comprises a metric thread or a self-tapping thread.

5. A joint according to any one of the preceding claims, further comprising a pin (80) for engaging with the transverse shaft (60), wherein the pin comprises a hexagonal shank (81) and a head (82) having a circular cross-section with a hexagon socket (83).

6. A method of joining a first panel (200), for example a shelf of a furniture unit, to a second panel (210), for example an upright of a furniture unit, wherein said first panel (200) comprises a recess (201) in its thickness and a transverse hole (202) and said second panel (210) comprises a threaded bushing (300), or a hole or a recess (201), the method comprising:
- providing a joint according to one or more of the preceding claims;
- inserting the joint completely inside the recess (201) of the first panel (200);
- rotating the transverse shaft (60) so as to cause rotation of the longitudinal shaft (63) and rotation of the threaded pin (67), so that the threaded pin (67) passes from the configuration inside the body (10) to the configuration at least partially outside the body (10) and engages inside a threaded hole in the bush (300) or a hole made directly in the second panel (210).

7. The method of claim 6, with the step of fully inserting the joint comprises the step of pushing the joint so that the expansion plug (20) expands on the outer surface of the body (10).

8. The method of claim 6 or 7, further comprising the step of rotating the joint body with a tool, for example a hex wrench or a screwdriver, so as to adjust its position or extract it from the recess (201).

9. An assembly of a first panel (200) with a second panel (210) which are connected in an end-to-end configuration, wherein the first panel comprises a first cavity (201) and a first joint (101, 102, 103, 104) according to any of claims 1 to 5 which is housed in the first cavity, wherein the second panel (210) comprises a second cavity (201) and a second joint (105) housed in the second cavity,
wherein the second joint (105) comprises:
a substantially hollow body (10) having substantially a cylindrical shape with an outer end (11) and an inner end (12), and
a nut at least partially within said body (10) for providing a threaded hole;
wherein said body (10) comprises an outer surface and wherein said outer surface comprises raised ridges forming a knurling (30),
wherein the knurling (30) has a substantially helical progression,
wherein the threaded pin (67) of the first joint is threaded in the threaded hole.

## Patentansprüche

1. Verbindungselement (101, 102, 103, 104) zum Verbinden einer ersten Platte (200) mit einer zweiten Platte (210, 200) mit:
einem im Wesentlichen hohlen Körper (10), der im Wesentlichen eine zylindrische Form mit einem äußeren Ende (11) und einem inneren Ende (12) aufweist, und
einer Verzahnung zum drehbaren Verschieben eines Gewindestifts (67) aus einer in den Körper (10) zurückgezogenen Position in eine zumindest teilweise aus dem Körper (10) ausgezogenen Position,
wobei die Verzahnung eine Querwelle (60) mit einem ersten Kegelrad (61) und eine Längswelle (63) mit einem zweiten Kegelrad (64) aufweist, das mit dem ersten Kegelrad (61) in Eingriff steht, wobei die Drehung der Querwelle (60) die Drehung der Längswelle und die Drehung des Gewindestifts (67) bewirkt,
wobei der Körper (10) eine Außenfläche aufweist und wobei die Außenfläche erhabene Wülste aufweist, die eine Rändelung (30) bilden,
**dadurch gekennzeichnet,**
**dass** die Rändelung (30) einen im Wesentlichen schraubenförmigen Verlauf aufweist, und
**dass** das Verbindungselement weiter einen Spreizdübel (20) aufweist, der ausgebildet ist, um mit der Außenfläche des Körpers (10) in Eingriff zu stehen, wenn das Verbindungselement vollständig in eine Aussparung (201) in der Dicke einer Platte (200), beispielsweise eines Einlegebodens eines Möbelstücks, eingeführt ist.

2. Verbindungselement nach Anspruch 1,
das weiter ein hexagonales Element (111) zum Drehen des Körpers (10) aufweist.

3. Verbindungselement nach einem der Ansprüche 1 bis 2,
das an dem äußeren Ende (11) einen Schlitz für einen Schraubendreher zum Drehen des Körpers (10) aufweist.

4. Verbindungselement nach einem der bisherigen Ansprüche,
wobei der Gewindestift (67) ein metrisches Gewinde oder ein selbstschneidendes Gewinde aufweist.

5. Verbindungselement nach einem der bisherigen Ansprüche,
welches zusätzlich einen Stift (80) zum Eingriff in die Querwelle (60) aufweist, wobei der Stift einen Sechskantschaft (81) und einen Kopf (82) mit einem kreisförmigen Querschnitt mit einer Sechskantaufnahme (83) aufweist.

6. Verfahren zum Verbinden einer ersten Platte (200), beispielsweise eines Einlegebodens eines Möbelstücks mit einer zweiten Platte (210), beispielsweise einem Pfosten eines Möbelstücks, wobei die erste Platte (200) in ihrer Dicke eine Aussparung (201) und ein Querloch (202) aufweist und die zweite Platte (210) eine Gewindebuchse (300) oder ein Loch oder eine Aussparung (201) aufweist, wobei das Verfahren umfasst:
- Bereitstellen eines Verbindungselements nach einem oder mehreren der bisherigen Ansprüche;
- Vollständiges Einführen des Verbindungselementes in die Aussparung (201) der ersten Platte (200);
- Drehen der Querwelle (60), um eine Drehung der Längswelle (63) und eine Drehung des Gewindestifts (67) zu bewirken, so dass der Gewindestift (67) von der Ausbildung innerhalb des Körpers (10) in die Ausbildung zumindest teilweise außerhalb des Körpers (10) übergeht und in ein Gewindeloch in der Buchse (300) oder in ein direkt in der zweiten Platte (210) ausgebildetes Loch eingreift.

7. Verfahren nach Anspruch 6, mit dem Schritt des vollständigen Einführens des Verbindungselements, was den Schritt des Drückens des Verbindungselements aufweist, so dass sich der Spreizdübel (20) an der Außenfläche des Körpers (10) ausdehnt.

8. Verfahren nach Anspruch 6 oder 7, welches weiter den Schritt des Drehens des Verbindungselementkörpers mit einem Werkzeug, beispielsweise einem Sechskantschlüssel oder einem Schraubendreher, aufweist, um dessen Position anzupassen oder es aus der Aussparung (201) herauszuziehen.

9. Anordnung einer ersten Platte (200) mit einer zweiten Platte (210), die in einer Ende-zu-Ende-Ausbildung verbunden sind, wobei die erste Platte einen ersten Hohlraum (201) und ein erstes Verbindungselement (101, 102, 103, 104) nach einem der Ansprüche 1 bis 5 aufweist, das in dem ersten Hohlraum aufgenommen ist, wobei die zweite Platte (210) einen zweiten Hohlraum (201) und ein zweites Verbindungselement (105) aufweist, das in dem zweiten Hohlraum aufgenommen ist, wobei das zweite Verbindungselement (105) aufweist:
einen im Wesentlichen hohlen Körper (10), der im Wesentlichen eine zylindrische Form mit einem äußeren Ende (11) und einem inneren Ende (12) aufweist, und
eine Mutter, die zumindest teilweise innerhalb des Körpers (10) angeordnet ist, um ein Gewindeloch bereitzustellen;
wobei der Körper (10) eine Außenfläche aufweist und wobei die Außenfläche erhabene Wülste aufweist, die eine Rändelung (30) bilden, wobei die Rändelung (30) einen im Wesentlichen schraubenförmigen Verlauf aufweist,
wobei der Gewindestift (67) des ersten Verbindungselements in das Gewindeloch eingeschraubt ist.

## Revendications

1. Joint (101, 102, 103, 104) pour assembler un premier panneau (200) avec un deuxième panneau (210, 200), comprenant :
un corps (10) sensiblement creux ayant sensiblement une forme cylindrique avec une extrémité externe (11) et une extrémité interne (12), et
un engrenage pour déplacer de manière rotative une tige filetée (67) d'une position rétractée à l'intérieur du corps (10) vers une position au moins partiellement extraite du corps (10) ;
dans lequel ledit engrenage comprend un axe transversal (60) avec une première roue conique (61) et un axe longitudinal (63) avec une deuxième roue conique (64) en prise avec ladite première roue conique (61), dans lequel la rotation de l'axe transversal (60) entraîne la rotation de l'axe longitudinal et la rotation de la tige filetée (67),
dans lequel ledit corps (10) comprend une surface externe et dans lequel ladite surface externe comprend des arêtes en relief formant un moletage (30), **caractérisé en ce que**
le moletage (30) a une progression sensiblement hélicoïdale,
et **en ce que**
le joint comprend en outre une cheville expansible (20) qui est configurée pour se mettre en prise avec la surface externe du corps (10) lorsque le joint est complètement inséré à l'intérieur d'un évidement (201) dans l'épaisseur d'un panneau (200), par exemple d'une étagère, d'une unité de meuble.

2. Joint selon la revendication 1, comprenant en outre un élément hexagonal (111) pour faire tourner le corps (10).

3. Joint selon l'une quelconque des revendications 1 à 2, comprenant une fente pour un tournevis à l'extrémité externe (11) pour faire tourner le corps (10).

4. Joint selon l'une quelconque des revendications précédentes, dans lequel la tige filetée (67) comprend un filetage métrique ou un filetage auto-taraudeur.

5. Joint selon l'une quelconque des revendications précédentes, comprenant en outre une tige (80) pour se mettre en prise avec l'axe transversal (60), dans lequel la tige comprend un fût hexagonal (81) et une tête (82) ayant une section transversale circulaire avec un six pans creux (83).

6. Procédé d'assemblage d'un premier panneau (200), par exemple d'une étagère d'une unité de meuble, sur un deuxième panneau (210), par exemple un montant d'une unité de meuble, dans lequel ledit premier panneau (200) comprend un évidement (201) dans son épaisseur et un trou transversal (202) et ledit deuxième panneau (210) comprend une bague filetée (300), ou un trou ou un évidement (201), le procédé comprenant :
- la fourniture d'un joint selon une ou plusieurs des revendications précédentes ;
- l'insertion du joint complètement à l'intérieur de l'évidement (201) du premier panneau (200) ;
- la rotation de l'axe transversal (60) de sorte à entraîner la rotation de l'axe longitudinal (63) et la rotation de la tige filetée (67), de telle sorte que la tige filetée (67) passe de la configuration à l'intérieur du corps (10) à la configuration au moins partiellement à l'extérieur du corps (10) et se met en prise à l'intérieur d'un trou fileté dans la bague (300) ou d'un trou réalisé directement dans le deuxième panneau (210).

7. Procédé selon la revendication 6, dans lequel l'étape d'insertion complète du joint comprend l'étape de poussée du joint de telle sorte que la cheville expansible (20) s'étend sur la surface externe du corps (10).

8. Procédé selon la revendication 6 ou 7, comprenant en outre l'étape de rotation du corps de joint avec un outil, par exemple une clé hexagonale ou un tournevis, de sorte à ajuster sa position ou à l'extraire de l'évidement (201).

9. Assemblage d'un premier panneau (200) avec un deuxième panneau (210) lesquels sont reliés selon une configuration bout-à-bout, dans lequel le premier panneau comprend une première cavité (201) et un premier joint (101, 102, 103, 104) selon l'une quelconque des revendications 1 à 5 qui est logé dans la première cavité, dans lequel le deuxième panneau (210) comprend une deuxième cavité (201) et un deuxième joint (105) logé dans la deuxième cavité,
dans lequel le deuxième joint (105) comprend :
un corps (10) sensiblement creux ayant sensiblement une forme cylindrique avec une extrémité externe (11) et une extrémité interne (12), et
un écrou au moins partiellement à l'intérieur dudit corps (10) pour fournir un trou fileté ;
dans lequel ledit corps (10) comprend une surface externe et dans lequel ladite surface externe comprend des arêtes en relief formant un moletage (30), dans lequel le moletage (30) a une progression sensiblement hélicoïdale,
dans lequel la tige filetée (67) du premier joint est filetée dans le trou fileté.
